# EUROPÄISCHE PATENTSCHRIFT

(11) **EP 0 995 507 B1**
(45) Veröffentlichungstag und Bekanntmachung des Hinweises auf die Patenterteilung: **07.07.2004**
(21) Anmeldenummer: 99109511.8
(22) Anmeldetag: 12.05.1999
(51) Int. Cl.: B21B 38/00, G01N 27/90

(54) **Vorrichtung zur zerstörungsfreien Prüfung von insbesondere heissem stabförmigem Walzmaterial**
Device for non-destructive testing in particular of hot rod-shaped rolling stock
Dispositif d'inspection non-destructive en particulier pour un produit laminé chaud en forme de barre

(30) Priorität: 03.09.1998 DE 19840187; 30.10.1998 DE 19850055
(43) Veröffentlichungstag der Anmeldung: 26.04.2000
(73) Patentinhaber: Georgsmarienhütte GmbH, 49124 Georgsmarienhütte (DE)
(72) Erfinder: Horst Scharlemann, 49170 Hagen (DE)
(74) Vertreter: Röther, Peter, Dipl.-Phys.

(56) Entgegenhaltungen:
- EP-A- 0 878 247
- GB-A- 2 014 317
- US-A- 4 123 708
- US-A- 4 673 879
- US-A- 4 767 986
- PATENT ABSTRACTS OF JAPAN vol. 007, no. 156 (P-209), 8. Juli 1983 (1983-07-08) -& JP 58 066050 A (SHIMAZU SEISAKUSHO KK), 20. April 1983 (1983-04-20)

## Beschreibung

Die Erfindung betrifft eine Vorrichtung zur zerstörungsfreien Prüfung von insbesondere heißem stabförmigem Walzmaterial, dessen Temperatur oberhalb des Curie-Punktes liegt, gemäß dem Oberbegriff des Patentanspruchs 1.

Aus der Patentanmeldung 197 19 980.1-52 ist eine Vorrichtung bekannt, bei der eine Durchlaufspule, also ein das durchlaufende Walzmaterial ringförmig umschließende Prüfspulensystem eingesetzt wird.

Der radiale Abstand zwischen der Oberfläche des Walzmaterials und dem Innenumfang des Prüfspulensystems muß dabei minimal sein, um eindeutige Prüfergebnisse bezüglich im Walzmaterial vorhandener Fehler erhalten zu können. Dies wird bei der vorbekannten Vorrichtung dadurch erreicht, dass das Prüfspulensystem an einem Ort in der Walzstraße montiert wird, an dem das Walzgut durch die kurz hintereinander angeordneten Walzensysteme selbst eine optimale Geradführung erfährt, so daß Radialbewegungen des Walzmaterials so gut wie ausgeschlossen sind, die eventuell zu Verfälschungen des Meßergebnisses führen.

Nachteilig bei der vorbekannten Vorrichtung ist allerdings, daß Fehler mit Ausrichtung in Walzrichtung im Hinblick auf ihre Länge nur unzureichend genau detekiert werden können. Darüber hinaus ist das Prüfspulensystem erheblicher Hitzeeinwirkung durch den heißen durchlaufenden Stahl ausgesetzt, so daß, obwohl das Prüfspulensystem wassergekühlt ist, Bedingungen und Zerstörungen nicht auszuschließen sind.

Die Erfindung geht aus von einer Vorrichtung, wie sie aus der GB-A- 2 014 317 bekannt ist. Hier ist (insbesondere in Figur 2) ein rotierendes Prüfspulensystem dargestellt, welches auf Schienen an den Prüfort, welcher durch den Schienenverlauf begrenzt ist, herangefahren werden kann. Die vorbekannte Vorrichtung fällt in erster Linie durch ihre lange Bauart auf, was neben dem Nachteil, dass diese Vorrichtung nicht an beliebigen Orten eingesetzt werden kann, den weiteren Nachteil aufweist, dass durch die Nichtgewährleistung der exakten Geradführung des zu prüfenden Materials zum einen Meßfehler auftreten können, zum anderen aber auch die Vorrichtung beschädigt oder gar zerstört werden kann. Bedingt durch die Länge der Vorrichtung ist auch die Wasserführung zum Kühlen sowohl der Spulen als auch der Rotationslager kompliziert und aufwendig.

Der Erfindung liegt daher die Aufgabe zugrunde, eine Vorrichtung der eingangs genannten Art so auszugestalten, dass zum einen das Prüfspulensystem vor Hitzeeinwirkung durch den zu prüfenden Stahl geschützt ist und zum anderen eine verbesserte Detektionsempfindlichkeit bezüglich Ort und Ausdehnung der im zu prüfenden Material enthaltenen Fehlstellen gegeben ist.

Die Erfindung löst diese Aufgabe gemäß dem kennzeichnenden Teil des Anspruchs 1 dadurch, dass zwischen Walzmaterial und Prüfspulensystem eine gegen das Prüfspulensystem und das Walzmaterial abgeschirmte Kühlmittelschicht vorgesehen ist, wobei die Abschirmung aus einem Material besteht, dessen Permeabilität µ = 1 beträgt und dessen Leitfähigkeit gegen Null geht. Kühlmittelschichten (allerdings bei nicht rotierenden Systemen) sind auch aus der US-A- 4 673 879 und JP-A-58-66050 bekannt. Darüber hinaus sind aus der erstgenannten, den nächst kommenden Stand der Technik bildenden Druckschrift sowie aus der US-A-4 673 879 und der US-A-4 123 708 Hitzeschilde aus rostfreiem Stahl bekannt, also ebenfalls Abschirmungen aus einem Material mit Permeabilität µ=1.

In einer ersten Alternative besteht die Abschirmung bei der Erfindung aus unmittelbar vor dem Prüfspulensystem in Abstand zueinander angeordneten Platten, die einen mit einem Kühlmitteleintritt und einem Kühlmittelaustritt versehenen Kühlmittelraum einschließen.

Diese Abschirmung dient zum einen als Wärmeschutz für das Prüfspulensystem und zum anderen dient es dazu, dass das zwischen Prüfspulensystem und Walzmaterial befindliche Kühlmittel, beispielsweise Wasser, nicht mit der Stahloberfläche in Berührung kommt. Hierdurch würde nämlich die Stahloberfläche an dieser Stelle unter die Curie-Temperatur abgekühlt, so daß derartig abgekühlte Stellen als Materialfehler detektiert würden.

In einer zweiten Alternative ist gemäß Anspruch 2 vorgesehen, dass als Abschirmung mindestens ein das Walzmaterial vollständig umgebender Rohrabschnitt angeordnet ist.

Als Material für die Abschirmung wird ein solches gewählt, daß eine Permeabilität von µ=1 und eine Leitfähigkeit von annähernd Null aufweist, damit die Magnetfeldlinien des Spulensystems nicht gestört werden.

Zur genaueren Ortsdetektion der im Prüfmaterial enthaltenen Fehlstellen wird gemäß Anspruch 4 vorgeschlagen, daß das mindestens eine umlaufende Prüfspulensystem mit einem Winkelcodierer verbunden ist.

In einer dritten Alternative ist vorgesehen, daß das mindestens eine Prüfspulensystem von einer Keramikkappe abgedeckt ist, was ebenfalls als Hitzeschutz dient und wobei die Kühlmittelschicht durch den das Walzmaterial umgebenden Rohrabschnitt gegen die Stahloberfläche abgegrenzt ist.

In einer bevorzugten Ausführungsform der Erfindung sind gemäß Anspruch 6 zwei Rohrabschnitte vorgesehen, die konzentrisch angeordnet sind und einen mit Kühlmittel beaufschlagbaren Ringraum zwischen sich einschließen.

In diesem Fall kann auf die Keramikkappe auf dem Prüfspulensystem verzichtet werden.

Der Ringraum ist beidseitig verschlossen und verfügt über einen Kühlmittelzu- und einen Kühlmittelabfluß.

Die Abschirmungen, also die den Kühlmittelraum bildenden Platten, die Spulensystem-Abdeckkappe sowie die Rohrabschnitte bestehen gemäß Anspruch 7 vorzugsweise aus Keramik, einem Material also, das die oben angesprochenen Eigenschaften in sich vereinigt.

Um das Auflösungsvermögen bei der Fehlerdetektion zu vergrößern bzw. bei definiertem Auflösungsvermögen die Rotationsgeschwindigkeit der Detektoren zu verringern, sieht die Ausführungsform gemäß Anspruch 8 vor, daß zwei um 180° zueinander versetzt angeordnete, in einer gemeinsamen Ebene umlaufende Prüfspulensysteme vorgesehen sind.

Drei oder mehr Prüfspulensysteme in sternförmiger Anordnung sind denkbar.

Die erfindungsgemäße Vorrichtung hat den Vorteil, daß trotz Steigerung der Meßempfindlichkeit eine kurze Baulänge verwirklicht werden kann, so daß in jedem Fall ein günstiger Einbauort innerhalb der Walzstrecke gewählt werden kann, so z.B. gemäß Anspruch 9 zwischen zwei benachbarten Walzgerüsten oder auch gemäß Anspruch 10 unmittelbar hinter einem Walzgerüst, also dort, wo das Walzmaterial besonders gerade geführt ist, um durch radiale Eigenbewegungen des Walzmaterials verursachte Scheinfehler praktisch ausschließen zu können. Allerdings ist der Einbauort beim erfindungsgemäßen System nicht sonderlich kritisch, da durch die Radialbewegungen des Walzmaterials erzeugte Effekte in bekannter Weise elektronisch herausgefiltert werden können.

Die Erfindung wird im folgenden anhand von Zeichnungen dargestellt und näher erläutert.

Es zeigen:
- Fig. 1:: Vorrichtung in einer ersten Ausführungsform (Seitenansicht teilweise im Schnitt),
- Fig. 2:: Vorrichtung in einer alternativen Ausführungsform,
- Fig. 3:: Schnitt entlang A-A aus Fig. 1,
- Fig. 4:: Vorrichtung in einer zweiten alternativen Ausführungsform, teilweise im Schnitt.

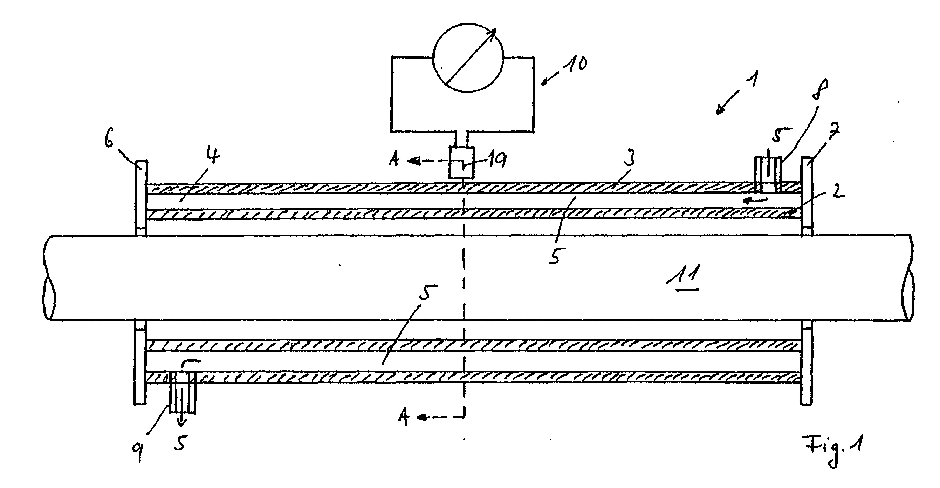

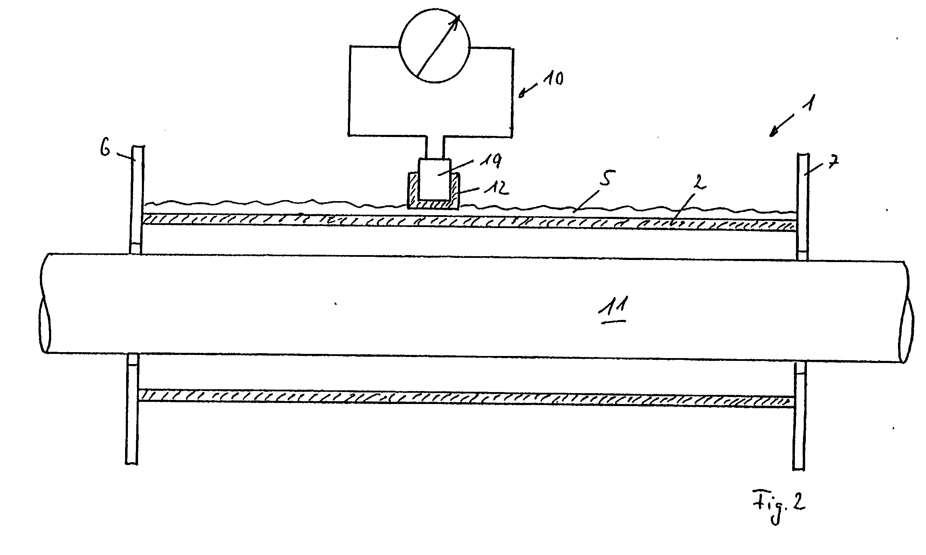

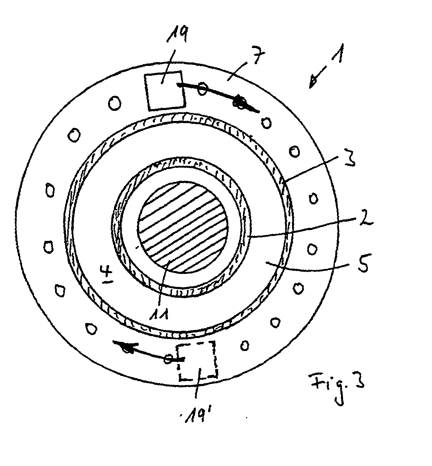

In der Fig. 1 ist eine bevorzugte Ausführungsform der erfindungsgemäßen Vorrichtung dargestellt und allgemein mit dem Bezugszeichen 1 versehen.

Sie besteht im wesentlichen aus zwei konzentrisch angeordneten Rohrabschnitten 2 und 3 aus keramischem Material. Die beiden Rohrabschnitte 2 und 3 schließen zwischen sich einen Ringraum 4 ein, der mit einem Kühlmittel 5 (beispielsweise Wasser) beaufschlagbar ist. Flansche 6 und 7 schließen den Ringraum 4 an den Stirnseiten ab. Die Kühlmittelzufuhr erfolgt über einen Anschluß 8, die Abfuhr über einen Anschluß 9. Etwa mittig zwischen den Flanschen 6 und 7 ist ein Prüfspulensystem 19 rotierbar um den Rohrabschnitt 3 angeordnet. Spannungsversorgung und Auswerteeinheit des Prüfspulensystems 19 sind bei 10 lediglich schematisch angedeutet. Mit 11 ist das zu prüfende Walzmaterial bezeichnet, das durch die Vorrichtung 1 hindurchgeführt wird.

In der Fig. 2 ist eine alternative Ausführungsform der erfindungsgemäßen Vorrichtung 1 dargestellt, bei der gleiche Elemente mit den gleichen Bezugszeichen wie in Fig. 1 bezeichnet sind.

Bei dieser Ausführungsform ist lediglich ein Rohrabschnitt 2 aus keramischem Material vorgesehen. Das Prüfspulensystem 19 ist mit einer Keramikkappe 12 versehen und so gegen das zwischen Rohrabschnitt 2 und Prüfspulensystem 19 befindliche Kühlmittel 5 geschützt.

In der Fig. 3 ist die Vorrichtung gemäß Fig. 1 im Schnitt dargestellt, wobei zusätzlich ein zweites Prüfspulensystem 19' vorgesehen ist, die um 180° gegenüber dem Prüfspulensystem 19 versetzt angeordnet ist und zusammen mit dieser um den Rohrabschnitt 3 herum rotiert.

Durch die Kombination der Rotationsbewegung der Prüfspulensysteme 19, 19' und der Walzrichtung ergibt sich beim Detektionsvorgang eine spiralförmig verlaufende Detektionsspur, so daß insbesondere die Längenausdehnung von in Walzrichtung verlaufenden Fehlstellen sehr genau ermittelt werden kann.

Um auch den Ort der Fehlstellen in Umfangsrichtung genau ermitteln zu können, wirkt das Prüfspulensystem 19, 19' mit einem nicht dargestellten Winkelcodierer zusammen.

Um die Detektionsauflösung noch erhöhen zu können, sind wie in Fig. 3 dargestellt zwei um 180° zueinander versetzt angeordnete Prüfspulensysteme 19, 19' vorgesehen. Dieses zweite Prüfspulensystem 19' hat darüber hinaus den Vorteil, daß bei einem bestimmten Auflösungsvermögen die Rotationsgeschwindigkeit der Prüfspulensysteme 19, 19' verringert werden kann.

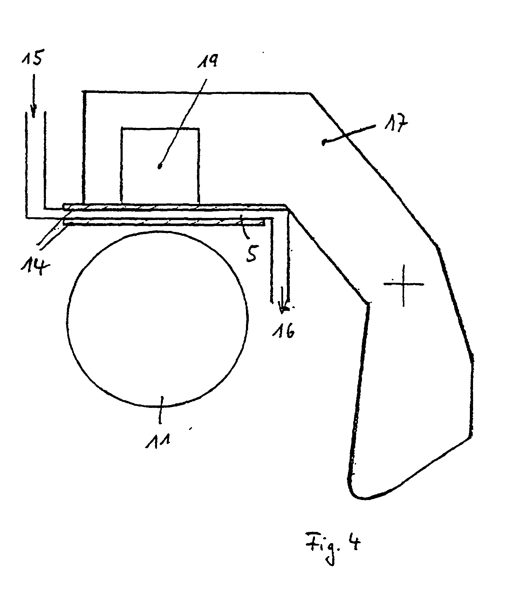

In der Fig. 4 ist eine weitere Alternative der erfindungsgemäßen Vorrichtung dargestellt. Unmittelbar unter dem Prüfspulensystem 19, 19' sind zwei in Abstand zueinander angeordnete Keramikplatten 14 angeordnet, die einen Kühlmittelraum 4 für die Kühlmittelschicht 5 einschließen, wobei der Kühlmittelraum 4 über einen Kühlmitteleintritt 15 und einen Kühlmittelaustritt 16 verfügt. Das Prüfspulensystem 19, 19' ist zusammen mit der Abschirmung 14 an einem Prüfspulensystem-Träger 17 montiert. Die Kühlmittelzufuhr kann bei diesem rotierenden System beispielsweise über den Rotierüberträger erfolgen, über den auch die elektrischen Signale geführt werden.

## Patentansprüche

1. Vorrichtung zur zerstörungsfreien Prüfung von insbesondere heißem stabförmigen Walzmaterial mit einer Temperatur oberhalb des Curie-Punktes bestehend aus mindestens einem Prüfspulensystem (19,19') mit auf das Walzmaterial (11) ausgerichtetem Spulensystem, das um das Walzmaterial (11) rotierbar angeordnet ist, **dadurch gekennzeichnet, dass** zwischen Walzmaterial (11) und Prüfspulensystem (19, 19') eine gegen das Prüfspulensystem (19, 19') und das Walzmaterial (11) abgeschirmte Kühlmittelschicht (5) vorgesehen ist, wobei die Abschirmung (2, 3, 12, 14) aus einem Material besteht, dessen Permeabilität µ = 1 beträgt und dessen Leitfähigkeit gegen Null geht.

2. Vorrichtung nach Anspruch 1,
**dadurch gekennzeichnet,**
**daß** die Abschirmung aus unmittelbar vor dem Prüfspulensystem (19,19') in Abstand zueinander angeordneten Platten (14) besteht, die einen mit einem Kühlmitteleintritt (15) und einem Kühlmittelaustritt (16) versehenen Kühlmittelraum (4) einschließen.

3. Vorrichtung nach Anspruch 1,
**dadurch gekennzeichnet,**
**daß** als Abschirmung mindestens ein das Walzmaterial (11) vollständig umgebender Rohrabschnitt (2,3) angeordnet ist.

4. Vorrichtung nach einem der Ansprüche 1 bis 3,
**dadurch gekennzeichnet,**
**daß** das mindestens eine umlaufende Prüfspulensystem (19,19') mit einem Winkelcodierer verbunden ist.

5. Vorrichtung nach einem der Ansprüche 1, 3 oder 4,
**dadurch gekennzeichnet,**
**daß** das mindestens eine Prüfspulensystem (19,19') von einer Keramikkappe (12) abgedeckt ist.

6. Vorrichtung nach einem der Ansprüche 1, 3 oder 4,
**dadurch gekennzeichnet,**
**daß** zwei Rohrabschnitte (2,3) vorgesehen sind, die konzentrisch angeordnet sind und einen mit Kühlmittel (5) beaufschlagbaren Ringraum (4) zwischen sich einschließen.

7. Vorrichtung nach einem der Ansprüche 1 bis 6,
**dadurch gekennzeichnet,**
**daß** die Abschirmung (2,3,12,14) aus Keramik besteht.

8. Vorrichtung nach einem der Ansprüche 1 bis 7,
**dadurch gekennzeichnet,**
**daß** zwei um 180° zueinander versetzt angeordnete Prüfspulensysteme (19,19') vorgesehen sind.

9. Vorrichtung nach einem der Ansprüche 1 bis 8,
**gekennzeichnet durch**
die Anordnung zwischen zwei benachbarten Walzgerüsten.

10. Vorrichtung nach einem der Ansprüche 1 bis 8,
**gekennzeichnet durch**
die Anordnung unmittelbar hinter einem Walzgerüst.

## Claims

1. A device for non-destructive testing of in particular hot rod-shaped rolling material at a temperature above the Curie point, comprising at least one test coil system (19, 19') having a coil system which is aligned with the rolling material (11) and is arranged to rotate about the rolling material (11), **characterised in that** there is provided between the rolling material (11) and the test coil system (19, 19') a coolant layer (5) which is shielded from the test coil system (19, 19') and the rolling material (11), with the shielding (2, 3,12,14) being made of a material whereof the permeability µ = 1 and whereof the conductivity approaches zero.

2. A device according to Claim 1, **characterised in that** the shielding comprises panels (14) which are arranged spaced from one another directly in front of the test coil system (19, 19') and enclose a coolant space (4) provided with a coolant inlet (15) and a coolant outlet (16).

3. A device according to Claim 1, **characterised in that**, arranged as the shielding, there is at least one tubular portion (2, 3) completely surrounding the rolling material (11).

4. A device according to one of Claims 1 to 3, **characterised in that** the at least one circulating test coil system (19, 19') is connected to an angle encoder.

5. A device according to one of Claims 1, 3 or 4, **characterised in that** the at least one test coil system (19, 19') is covered by a ceramic cap (12).

6. A device according to one of Claims 1, 3 or 4, **characterised in that** two tubular portions (2, 3) are provided which are arranged to be concentric and enclose between them an annular space (4) acted upon by coolant (5).

7. A device according to one of Claims 1 to 6, **characterised in that** the shielding (2, 3, 12, 14) is made of ceramic.

8. A device according to one of Claims 1 to 7, **characterised in that** two test coil systems (19, 19') arranged offset from one another by 180° are provided.

9. A device according to one of Claims 1 to 8, **characterised by** arrangement between two adjacent rolling stands.

10. A device according to one of Claims 1 to 8, **characterised by** arrangement directly behind a rolling stand.

## Revendications

1. Dispositif de contrôle non destructif, en particulier de matériau laminé à chaud, en forme de barre, avec une température au-dessus du point de Curie, se composant d'au moins un système de bobine exploratrice (19, 19') avec un système de bobine, orienté vers le matériau laminé (11), qui est disposé de manière à pouvoir tourner autour du matériau laminé (11), **caractérisé en ce qu'**il est prévu, entre le matériau laminé (11) et le système de bobine exploratrice (19,19'), une couche d'agent réfrigérant (5) protégée contre le système de bobine exploratrice (19, 19') et le matériau laminé (11), la protection (2, 3, 12, 14) se composant d'un matériau, dont la perméabilité est de µ = 1 et dont la conductibilité est proche de zéro.

2. Dispositif selon la revendication 1, **caractérisé en ce que** la protection se compose de plaques (14), disposées directement devant le système de bobine exploratrice (19, 19'), écartées l'une de l'autre, qui comprennent un espace d'agent réfrigérant (4), muni d'une entrée d'agent réfrigérant (15) et d'une sortie d'agent réfrigérant (16).

3. Dispositif selon la revendication 1, **caractérisé en ce qu'**au moins un tronçon de tube (2, 3), entourant totalement le matériau laminé (11), est disposé en tant que protection.

4. Dispositif selon l'une des revendications 1 à 3, **caractérisé en ce qu'**au moins l'un des systèmes de bobines exploratrices rotatifs (19, 19') est relié à un codeur angulaire.

5. Dispositif selon l'une des revendications 1, 3 ou 4, **caractérisé en ce qu'**au moins l'un des systèmes de bobines exploratrices rotatifs (19, 19') est recouvert d'un capot en céramique.

6. Dispositif selon l'une des revendications 1, 3 ou 4, **caractérisé en ce que** deux tronçons de tubes (2, 3) sont prévus, qui sont disposés de manière concentrique et comprennent, entre eux, un espace annulaire (4), pouvant être alimenté en agent réfrigérant (4).

7. Dispositif selon l'une des revendications 1 à 6, **caractérisé en ce que** la protection (2, 3, 12, 14) se compose de céramique.

8. Dispositif selon l'une des revendications 1 à 7, **caractérisé en ce que** deux systèmes de bobines exploratrices (19, 19'), disposés décalés l'un par rapport à l'autre de 180°, sont prévus.

9. Dispositif selon l'une des revendications 1 à 8, **caractérisé par** la disposition entre deux cages de laminoir voisines.

10. Dispositif selon l'une des revendications 1 à 8, **caractérisé par** la disposition immédiatement derrière une cage de laminoir.
